# EUROPÄISCHE PATENTANMELDUNG

(11) **EP 3 407 480 A1**
(43) Veröffentlichungstag der Anmeldung: **28.11.2018**
(21) Anmeldenummer: 17172724.1
(22) Anmeldetag: 24.05.2017
(51) Int. Cl.: H02M 7/5395, H02J 3/38

(54) **ANSTEUERVERFAHREN FÜR STROMRICHTER**

(71) Anmelder: Siemens Aktiengesellschaft, 80333 München (DE)
(72) Erfinder: Ivanov, Radoslav, 94060 Pocking (DE); Kraus, Ludwig, 94099 Ruhstorf (DE); Schwimmbeck, Franz, 94099 Ruhstorf (DE)

(57) **Zusammenfassung**

Die Erfindung betrifft ein Verfahren zur Ansteuerung eines Stromrichters (1), wobei bei der Ansteuerung von Halbleitern einer ersten Phase des Stromrichtes (1) eine Taktungslücke (2) vorgesehen wird. Zur Verringerung der Verluste im Stromrichter im Blindleistungsbetrieb wird vorgeschlagen, dass der zeitliche Mittelpunkt (21) der Taktungslücke (2) zu einem Scheitelpunkt des erzeugten Spannungsverlaufs (3) in der ersten Phase (11) zeitlich verschoben ist. Weiter betrifft die Erfindung einen Stromrichter (1) zur Verbindung einer elektrischen Komponente (7) mit einem Energieversorgungsnetz (6), wobei der Stromrichter (1) eine Regelung zur Durchführung eines derartigen Verfahrens aufweist, wobei zur Beeinflussung der Spannung des Energieversorgungsnetzes (6) eine Blindleistung zwischen Stromrichter (1) und Energieversorgungsnetz (6) austauschbar ist. Ferner betrifft die Erfindung eine Windkraftanlage (8) mit mindestens einem derartigen Stromrichter (1), wobei der Stromrichter (1) mit einem Windgenerator (81) und einem Energieversorgungsnetz verbunden (6) ist.

## Beschreibung

Die Erfindung betrifft ein Verfahren zur Ansteuerung eines Stromrichters, wobei bei der Ansteuerung von Halbleitern einer ersten Phase des Stromrichtes eine Taktungslücke vorgesehen wird. Die Erfindung betrifft weiter einen Stromrichter zur Verbindung einer elektrischen Komponente mit einem Energieversorgungsnetz, wobei der Stromrichter eine Regelung zur Durchführung eines derartigen Verfahrens aufweist. Ferner betrifft die Erfindung eine Windkraftanlage mit mindestens einem solchen Stromrichter, wobei der Stromrichter mit einem Windgenerator und einem Energieversorgungsnetz verbunden ist.

Zur Vermeidung von Verlusten wird ein Stromrichter am Energieversorgungsnetz meistens mit einem cosϕ=1 (Energieentnahme aus dem Energieversorgungsnetz) oder cosϕ=-1 (Energierückspeisung in das Energieversorgungsnetz) betrieben. Dabei besitzt der Strom zwischen Energieversorgungsnetz und Stromrichter nur eine Wirkkomponente. Durch das Fehlen einer Blindkomponente werden Verluste, insbesondere ohmsche Verluste, reduziert, die beispielsweise in Leitungen oder Halbleitern entstehen.

Darüber hinaus werden zur Reduzierung von Schaltverlusten sogenannte "discontinuous space vector" Pulsmuster eingesetzt. Bei diesen Pulsmustern finden in einem gewissen Teil der Grundschwingungsperiode in jeweils einer der Phasen keine Schalthandlungen statt. Das Auslassen von Schalthandlungen wird auch als Taktungslücke bezeichnet. Bei der Ausprägung "Flat-Top" dieses Pulsmusters befindet sich diese Taktungslücke jeweils im Maximum bzw. Minimum der Grundschwingungsspannung. Aufgrund des dann herrschenden hohen Spannungsbetrages wirkt sich die Taktungslücke besonders günstig auf das Verlustverhalten des Stromrichters aus, da keine Schaltverluste im Halbleiter entstehen.

Laut gültiger Vorgaben soll insbesondere eine Windenergieanlage fähig sein, neben der Wirkleistung auch dauerhaft oder kurzzeitig Blindleistung in das verbundene Energieversorgungsnetz einspeisen. Das bedeutet, dass zwischen Netzspannung und -strom eine Phasenverschiebung auftritt. Für diesen Fall wird der Stromrichter mit einem **|cos*ϕ*| ≠ 1** betrieben. Derzeit werden für diesen Betriebspunkt höhere Verluste, insbesondere im Stromrichter, in Kauf genommen.

Der Erfindung liegt die Aufgabe zugrunde, die Verluste eines Stromrichters für Betriebspunkte mit Blindleistungsaustausch zu verringern.

Diese Aufgabe wird durch ein Verfahren zur Ansteuerung eines Stromrichters gelöst, wobei bei der Ansteuerung von Halbleitern einer ersten Phase des Stromrichtes eine Taktungslücke vorgesehen wird, wobei der zeitliche Mittelpunkt der Taktungslücke zu einem Scheitelpunkt des erzeugten Spannungsverlaufs in der ersten Phase zeitlich verschoben ist. Ferner wird die Aufgabe durch einen Stromrichter zur Verbindung einer elektrischen Komponente mit einem Energieversorgungsnetz gelöst, wobei der Stromrichter eine Regelung zur Durchführung eines solchen Verfahrens aufweist, wobei zur Beeinflussung der Spannung des Energieversorgungsnetzes eine Blindleistung zwischen Stromrichter und Energieversorgungsnetz austauschbar ist. Weiter wird die Aufgabe durch eine Windkraftanlage mit mindestens einem solchen Stromrichter gelöst, wobei der Stromrichter mit einem Windgenerator und einem Energieversorgungsnetz verbunden ist.

Weitere vorteilhafte Ausführungen der Erfindung sind in den abhängigen Ansprüchen angegeben.

Der Erfindung liegt die Erkenntnis zugrunde, dass die Flat-Top-Modulation gerade dann besonders verlustoptimal ist, wenn dieses Pulsmuster bei einem cosϕ=1 bzw. cosϕ=-1 eingesetzt wird. Dann ist nicht nur die Spannung sondern auch der Strom maximal. Es können relativ hohe Schaltverluste vermieden werden, weil das Strommaximum zusammen mit dem Spannungsmaximum in die Mitte der Taktlücke fällt und hier keine Schaltverluste entstehen. Wenn der cosϕ nicht gleich 1 bzw. -1 ist, liegt das Strommaximum nicht genau in der Mitte der Taktlücke. Es entstehen somit höhere Schaltverluste in den Zeitpunkten außerhalb der Taktungslücke.

Es hat sich als besonders vorteilhaft erwiesen, die Taktungslücke in Richtung des Strommaximums zu verschieben. Dadurch können Verluste des Stromrichters in den Halbleitern reduziert werden. Die Verluste im Stromrichter setzen sich zusammen aus Durchlass- und Schaltverlusten. Wenn die Taktungslücke im oder zumindest näher am Bereich des Strommaximums liegt, steigen zwar die Durchlassverluste geringfügig an, die Schaltverluste entfallen jedoch vollständig dort. Die Gesamtverluste als Summe aus Durchlass- und Schaltverlusten sinkt dabei.

Gerade bei Windkraftanlagen ist dieses Verfahren besonders wirkungsvoll, da seitens der Energieversorgungsnetzbetreiber oftmals eine entsprechende Blindleistungseinspeisung gefordert wird. Darüber hinaus ist das Verfahren gerade bei großen Leistungen, wie sie insbesondere bei Windkraftanlagen vorhanden sind, besonders wirkungsvoll für die Reduktion der Stromrichterverluste, da die Halbleiter, die für diese Anwendung häufig verwendet werden, aufgrund ihrer Sperrfähigkeit relativ hohe Schaltverluste aufweisen.

Durch die geringeren Verluste hat der Stromrichter einen höheren Wirkungsgrad, insbesondere bei der Blindleistungseinspeisung. Durch die geringere thermische Belastung der Halbleiter verlängert sich auch die Lebensdauer des Stromrichters und unerwartete Ausfälle werden weniger wahrscheinlich. Damit wird gleichzeitig eine Steigerung der Zuverlässigkeit des Stromrichters erreicht.

Bei einer vorteilhaften Ausgestaltung der Erfindung wird die Taktungslücke um einen Wert zeitlich verschoben, der zwischen 50% und 100% des Wertes der Verschiebung zwischen Spannung und Strom in der ersten Phase entspricht. Die Schaltverluste sind abhängig von Spannung und Strom in der zu schaltenden Phase. Eine besonders gute Reduktion der Schaltverluste ergibt sich dann, wenn die Taktungslücke in Richtung des Stromscheitelpunktes verschoben wird. Dabei ist der Bereich der zeitlichen Verschiebung um die Hälfte des zeitlichen Unterschieds zwischen Strom- und Spannungsscheitel bis hin zum Scheitelpunkt des Stroms in der ersten Phase besonders wirkungsvoll bei der Reduzierung der Schaltverluste. Aufgrund der dann anliegenden hohen Spannung in der ersten Phase ist eine Modulation mit einer Taktungslücke sinnvoll anwendbar, da dann diese Phase fest mit einem Potential des Zwischenkreises verbunden ist. Somit können die Schaltverluste, teilweise sogar deutlich, reduziert werden.

Bei einer weiteren vorteilhaften Ausgestaltung der Erfindung ist der zeitliche Mittelpunkt der Taktungslücke identisch mit einem Scheitelpunkt des Stromverlaufs in der ersten Phase. Für eine einfache Regelung hat es sich als günstig erwiesen, den Scheitelpunkt des Stroms in der ersten Phase als zeitlichen Mittelpunkt der Taktungslücke zu verwenden. In dieser Ausgestaltung kann auf die genaue Bestimmung des Phasenunterschieds zwischen Strom und Spannung in der ersten Phase verzichtet werden. Gleichzeitig wurden in diesem Arbeitspunkt häufig die niedrigsten Gesamtverluste ermittelt. Somit steht mit dieser Ausgestaltung ein einfaches und gleichzeitig wirkungsvolles Verfahren zur Verlustleistungsreduktion im Stromrichter zur Verfügung.

Bei einer weiteren vorteilhaften Ausgestaltung der Erfindung erstreckt sich die Taktungslücke über einen zeitlichen Anteil von 1/6 der Periodendauer des erzeugten Spannungsverlaufs. Ein dreiphasiger Stromrichter weist für die Spannungserzeugung in seinen drei Phasen sechs Halbleiter auf. Die maximale Dauer für eine Taktungslücke beträgt somit 1/6 der Periodendauer. In diesem Fall ist zu jedem Zeitpunkt eine Taktungslücke in einer der Phasen aktiv, wenn die Taktungslücke in allen Phasen vorgesehen ist. Damit lässt sich eine besonders hohe Reduktion der Schaltverluste, und damit auch der Gesamtverluste, erreichen.

Bei einer weiteren vorteilhaften Ausgestaltung der Erfindung ist die Taktungslücke Teil einer verschobenen Flat-Top-Modulation. Die Flat-Top Modulation eignet sich im Besonderen auch für die Verlustoptimierung des Stromrichters im Blindleistungsbetrieb. Im Vergleich zur Flat-Top-Modulation ist die verschobene Flat-Top-Modulation hinsichtlich des Scheitelpunktes der Spannung verschoben. Mit anderen Worten wird im Vergleich zur bereits bekannten Flat-Top Modulation der Zeitpunkt der Taktungslücke in Richtung des StromScheitelpunktes verschoben. Es lassen sich damit auf einfache Weise die bereits bekannten und bewährten Vorteile der Flat-Top Modulation auch für den Blindleistungsbetrieb nutzen.

Bei einer weiteren vorteilhaften Ausgestaltung der Erfindung ist der Stromrichter mit einem Energieversorgungsnetz verbunden, wobei zur Beeinflussung der Spannung des Energieversorgungsnetzes eine Grundschwingungsverschiebungsblindleistung, zwischen Stromrichter und Energieversorgungsnetz ausgetauscht wird. Zur Stützung der Spannung in einem Energieversorgungsnetz hat es sich als vorteilhaft erwiesen, wenn daran angeschlossene Stromrichter bei Bedarf eine stabilisierende Wirkung auf das Energieversorgungsnetz haben. Dazu wird von manchen Betreibern, insbesondere bei der Einspeisung von elektrischer Energie in das Energieversorgungsnetz, gefordert, Blindleistung einzuspeisen um zur Spannungsstützung im Energieversorgungsnetz beizutragen. Gerade im Hinblick auf das Fehlerverhalten im Energieversorgungsnetz und auch bei dem Einsatz eines hohen Anteils von regenerativer Energie ist die Blindleistungseinspeisung von großem Vorteil, da sie der prinzipbedingten schlechteren Versorgungssicherheit regenerativer Energiequellen auf einfache Weise entgegenwirkt. Darüber hinaus können nicht nur elektrische Erzeuger mit einer Blindleistungseinspeiseregelung versehen werden, sondern es ist auch möglich, dies bei elektrischen Verbrauchern zu tun, die bisher verlustoptimiert mit einem cosϕ=1 am Energieversorgungsnetz betrieben wurden.

Bei einer weiteren vorteilhaften Ausgestaltung der Erfindung weist der Stromrichter IGBT Halbleiter mit einer Sperrspannung von mindestens 4,5kV auf. Gerade bei diesen auch als hochsperrend bezeichneten IGBT Halbleiter mit einer Sperrspannung von mindestens 4,5kV, insbesondere 6,5kV, dominieren die Schaltverluste in der Bilanz der Gesamtverluste. Daher ergibt sich in Summe eine besonders große Reduktion der Gesamtverlustleistung. Diese werden darüber hinaus vielfach in Windkraftanlagen eingesetzt, in denen eine entsprechende Blindleistungsregelung zur Spannungsstützung bereits seitens der Energieversorgungsunternehmen gefordert werden.

Im Folgenden wird die Erfindung anhand der in den Figuren dargestellten Ausführungsbeispiele näher beschrieben und erläutert. Es zeigen:
- FIG1, FIG3, FIG5, FIG7: Zeitverläufe von Strom und Spannung
- FIG2, FIG4, FIG6, FIG8: elektrische Verluste zu den Zeitverläufen
- FIG 9: eine Anordnung eines Stromrichters und
- FIG 10: eine Windkraftanlage am Energieversorgungsnetz.

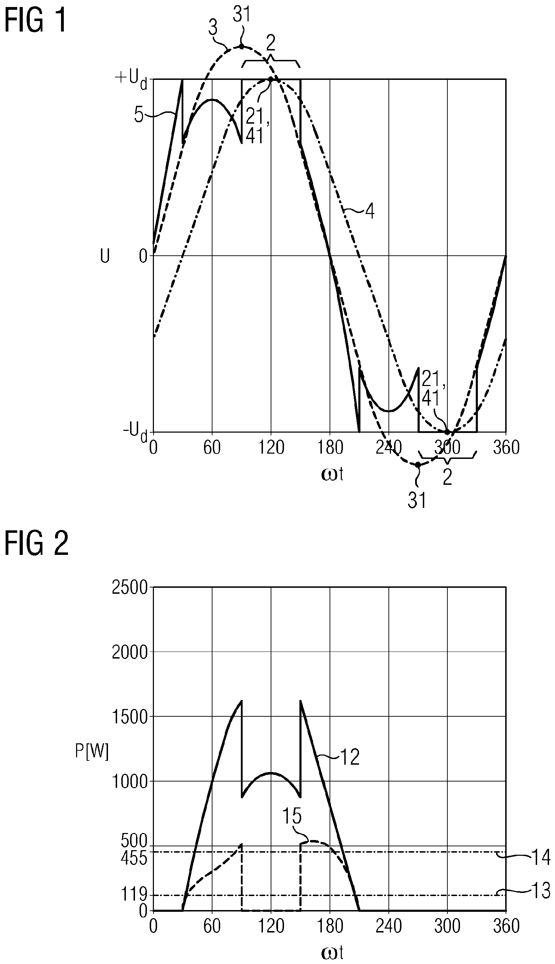

FIG 1 zeigt die Zeitverläufe der Spannungen 3, 5 und des Stroms 4 einer ersten Phase 11 eines Stromrichters 1. Bei dem Spannungsverlauf 3 handelt es sich um die Spannung am Stromrichterausgang, die um das Nullsystem bereinigt ist, während die Ausgangsspannung 5 der Stromrichterphase die Spannung gegenüber dem mittleren Gleichspannungspotential, auch als Nullpotential bezeichnet, darstellt. Anhand der Ausgangsspannung 5 des Stromrichters 1 ist deutlich die Taktungslücke 2 zu erkennen, in denen keine Schalthandlungen der Halbleiter 10 stattfinden. Dies bewirkt, dass zu diesem Zeitpunkt eines der Zwischenkreispotentiale an dem Phasenanschluss ansteht.

Es ist deutlich zu erkennen, dass die Taktungslücke 2 mit ihrem Mittelpunkt 21 der Taktungslücke 2 gegenüber dem Scheitelpunkt 31 des vom Stromrichter 1 erzeugten Spannungsverlaufs 3 zeitlich verschoben ist. In diesem Ausführungsbeispiel fällt der Mittelpunkt 21 der Taktungslücke 2 mit dem Scheitelpunkt 41 des Stromverlaufs 4 zusammen. Hiermit lassen sich, wie in FIG 2 angegeben, entsprechende Verluste bei Halbleiterschalter und Diode beobachten. Die durchgezogene Linie gibt jeweils den zeitlichen Verlauf der Verlustleistung 12 des Halbleiters bzw. der Verlustleistung 13 der Diode an. Die mittlere Verlustleistung 14 des Halbleiterschalters bzw. die mittlere Verlustleistung 15 der Diode ist jeweils über eine Grundschwingungsperiode gemittelt und gestrichelt dargestellt sowie mit einem Zahlenwert versehen, der ein Vergleich zwischen den Auswirkungen der einzelnen zeitlichen Verschiebungen der Taktlücke 2 ermöglicht. Die Gesamtverluste des Halbleiters 10 ergeben sich als Summe der Verluste von Halbleiterschalter und Diode. Dabei sind Modul und Taktfrequenz frei gewählt, so dass die Zahlenwerte der angegebenen Verlustleistungen einen Vergleich zueinander ermöglichen. Es ist zu erkennen, dass mit der Verschiebung der Taktlücke 2, bei dem der Mittelpunkt der Taktlücke 21 dem Scheitelpunkt 41 des Stromverlaufs 4 entspricht, die geringsten Verluste erreichbar sind, wenn eine Phasenverschiebung zwischen Strom und Spannung vorhanden ist.

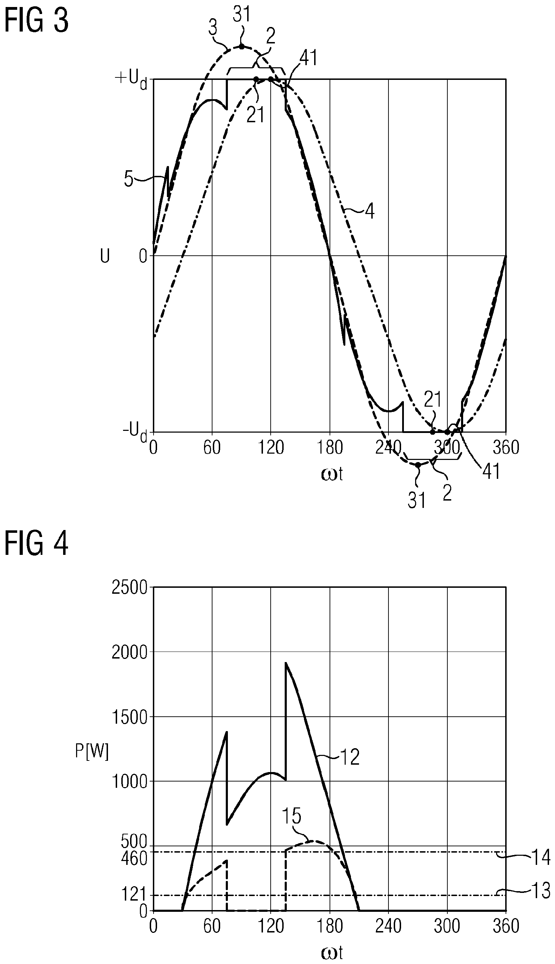

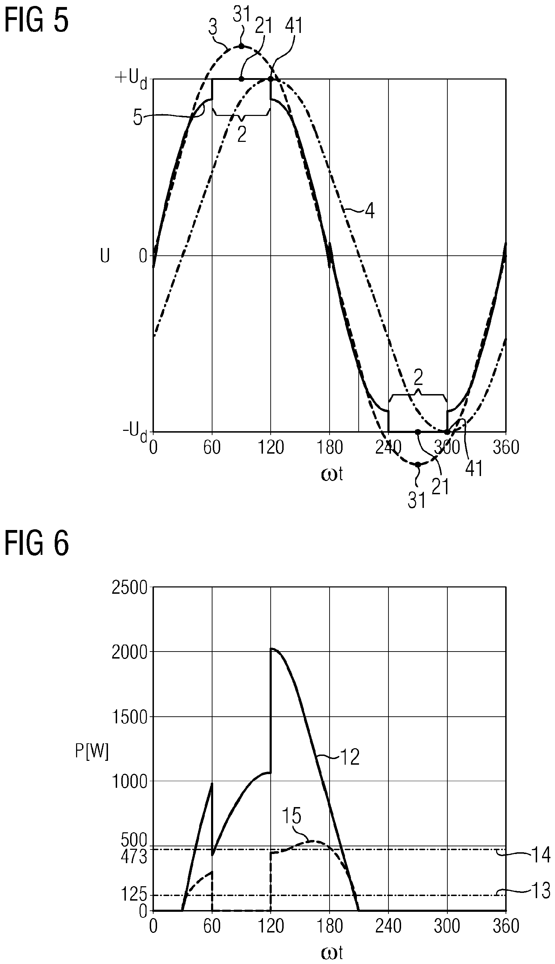

FIG 3 zeigt die Zeitverläufe der Spannungen 3, 5 und des Stroms 4 an der ersten Phase 11 des Stromrichters 1. Bei diesem Ausführungsbeispiel ist die Verschiebung der Taktlücke 2 geringer. Der Mittelpunkt 21 der Taktungslücke 2 liegt genau zwischen dem Scheitelpunkt 31 des Spannungsverlaufs 3 und dem Scheitelpunkt 41 des Stroms 4. Mit anderen Worten ist die Taktungslücke nur um 50% des Phasenunterschieds zwischen Spannungsverlauf 3 und Stromverlauf 4 verschoben. Zur Vermeidung von Wiederholungen wird auf die Beschreibung zur FIG 1 und die dort eingeführten Bezugszeichen verwiesen. Selbst mit dieser geringeren Verschiebung ist, wie aus FIG 4 ersichtlich, bereits eine deutliche Verringerung der Verluste gegenüber der bekannten Lösung nach FIG 6 erreichbar. Auch hinsichtlich FIG 4 wird zur Vermeidung von Wiederholungen auf die Beschreibung zur FIG 2 und die dort eingeführten Bezugszeichen verwiesen.

FIG 5 zeigt die Zeitverläufe der Spannungen 3, 5 und des Stroms 4 an der ersten Phase 11 des Stromrichters 1. Bei diesem Ausführungsbeispiel ist keine Verschiebung der Taktlücke 2 gegenüber des Spannungsverlaufs 3 vorhanden. Dies entspricht der Flat-Top Modulation aus dem Stand der Technik, wenn ein Blindleistungsaustausch stattfindet und Spannungsverlauf 3 und Stromverlauf 4 einen Phasenunterschied aufweisen. Zur Vermeidung von Wiederholungen wird auf die Beschreibung zu den Figuren 1 und 3 und die dort eingeführten Bezugszeichen verwiesen. Es ist in FIG 6 zu erkennen, dass die Verluste für diesen Fall deutlich größer ausfallen. Auch hinsichtlich FIG 6 wird zur Vermeidung von Wiederholungen auf die Beschreibung zu den Figuren 2 und 4 sowie auf die dort eingeführten Bezugszeichen verwiesen. Anhand dieser Verluste ist der Vorteil der Verschiebung der Taktungslücke 2 sichtbar.

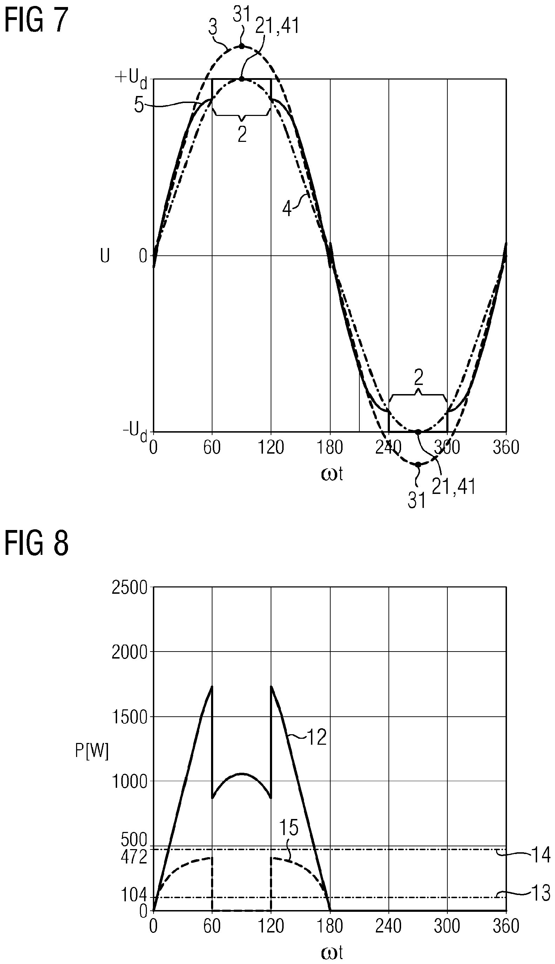

FIG 7 zeigt die Zeitverlaufe der Spannungen 3, 5 und des Stroms 4 an der ersten Phase 11 des Stromrichters 1. Bei diesem Ausführungsbeispiel findet kein Blindleistungsaustausch statt. Das ist daran erkennbar, dass der Stromverlauf 4 und der Spannungsverlauf 3 keinen zeitlichen Versatz zueinander aufweisen und in Phase sind. Dies entspricht der Flat-Top Modulation aus dem Stand der Technik, die gerade für Arbeitspunkte ohne Blindleistungsaustausch bekannt ist. Zur Vermeidung von Wiederholungen wird auf die Beschreibung zu den Figuren 1, 3 und 5 sowie auf die dort eingeführten Bezugszeichen verwiesen. Es ist in FIG 8 zu erkennen, dass die Verluste für diesen Fall gering sind, was den bereits bekannten Vorteil der Flat-Top Modulation ausmacht. Auch hinsichtlich FIG 8 wird zur Vermeidung von Wiederholungen auf die Beschreibung zu den Figuren 2, 4 und 6 sowie die dort eingeführten Bezugszeichen verwiesen. Dieser Vorteil lässt sich allerdings nur für einen Betrieb ohne Blindleistungsaustausch erzielen.

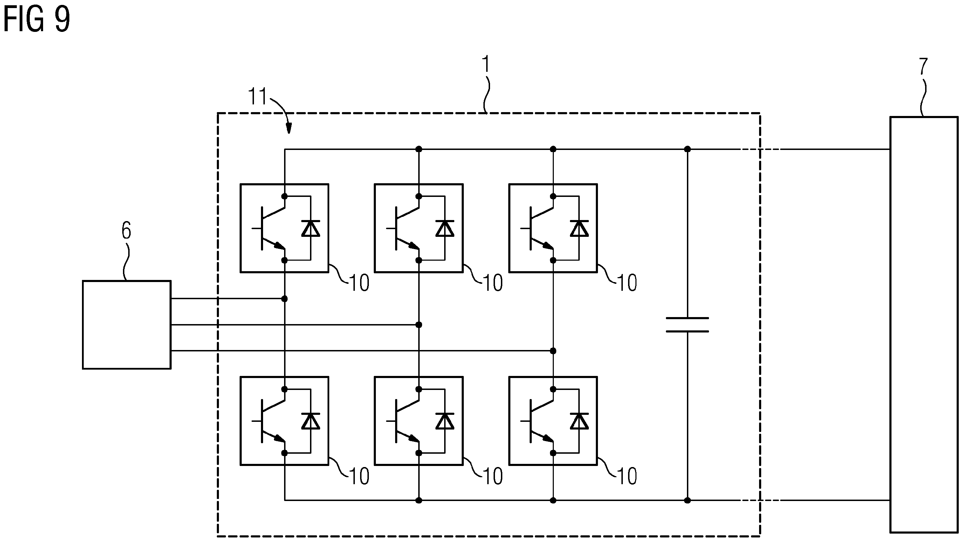

FIG 9 zeigt ein Ausführungsbeispiel einer Stromrichteranordnung. Ein Stromrichter 1 dient zur Verbindung einer elektrischen Komponente 7 mit einem Energieversorgungsnetz 6. Bei der elektrischen Komponente 7 kann es sich um einen elektrischen Verbraucher, der elektrische Energie aus dem Energieversorgungsnetz 6 bezieht, oder um eine Energiequelle, die elektrische Energie in das Energieversorgungsnetz 6 einspeist, handeln. Dabei kann die elektrische Komponente insbesondere eine hier nicht dargestellte Windkraftanlage 8 sein. Die elektrische Komponente 7 kann dabei entweder mit Gleichspannung aus dem Zwischenkreis des Stromrichters 1 betrieben werden oder mit einer Wechselspannung. Im Falle der Wechselspannung weist der Stromrichter 1 weitere Halbleiter auf, die die Gleichspannung des Zwischenkreises in eine Wechselspannung für den elektrischen Verbraucher 7 umwandelt. Alternativ kann diese Umwandlung auch mittels eines separaten, weiteren Stromrichters erfolgen.

Der Stromrichter 1 hat dabei neben der ersten Phase 11 des Stromrichters 1 noch zwei weitere Phasen. Jede dieser Phasen weist mindestens zwei Halbleiter 10 auf, die den Phasenausgang mit dem positiven oder negativen Potential des Zwischenkreises verbinden. Bei der Taktungslücke wird in einer der Phasen ein Halbleiterschalter für die Dauer der Taktungslücke eingeschaltet und der andere Halbleiterschalter der gleichen Phase für die Dauer der Taktungslücke ausgeschaltet. In den anderen Phasen takten die Halbleiter, beispielsweise gesteuert mit einer Pulsweitenmodulation (PWM), um das an den Phasenanschlüssen gewünschte Spannungssystem als Drehstromsystem zu erzeugen.

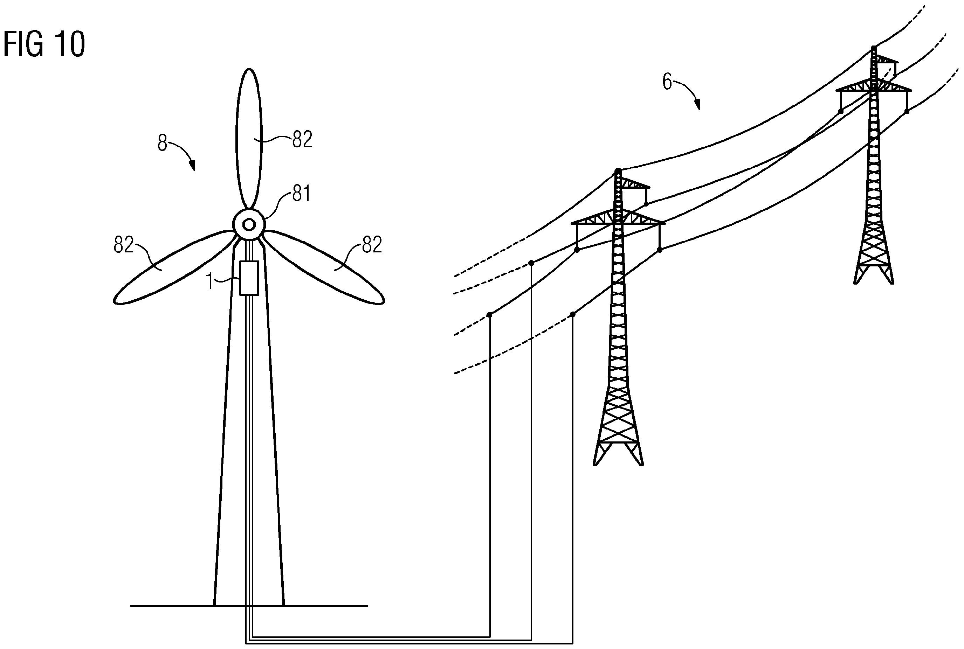

In FIG 10 ist eine Windkraftanlage 8 dargestellt, die mit einem Energieversorgungssystem 6 elektrisch verbunden ist. Das Energieversorgungssystem 6 ist dabei als Hochspannungsleitung dargestellt. Dabei kann die Einspeisung alternativ auch in ein Mittelspannungs- oder Niederspannungsnetz erfolgen. Die Rotorblätter 82 der Windkraftanlage 8 treiben dabei einen Windgenerator 81 an. Dieser ist mit einem Stromrichter 1 verbunden, der die durch den Windgenerator 81 erzeugten Wechselspannung, insbesondere eine dreiphasige Wechselspannung, in eine Spannung umformt, die sich für die Einspeisung in das Energieversorgungsnetz eignet. Die Höhe und die Phasenlage der erzeugten Spannung entscheidet darüber, wie viel Wirk-und Blindleistung in das Energieversorgungsnetz 6 eingespeist wird.

Zusammenfassend betrifft die Erfindung ein Verfahren zur Ansteuerung eines Stromrichters, wobei bei der Ansteuerung von Halbleitern einer ersten Phase des Stromrichtes eine Taktungslücke vorgesehen wird. Zur Verringerung der Verluste im Stromrichter im Blindleistungsbetrieb wird vorgeschlagen, dass der zeitliche Mittelpunkt der Taktungslücke zu einem Scheitelpunkt des erzeugten Spannungsverlaufs in der ersten Phase zeitlich verschoben ist. Weiter betrifft die Erfindung einen Stromrichter zur Verbindung einer elektrischen Komponente mit einem Energieversorgungsnetz, wobei der Stromrichter eine Regelung zur Durchführung eines derartigen Verfahrens aufweist, wobei zur Beeinflussung der Spannung des Energieversorgungsnetzes eine Blindleistung zwischen Stromrichter und Energieversorgungsnetz austauschbar ist. Ferner betrifft die Erfindung eine Windkraftanlage mit mindestens einem derartigen Stromrichter, wobei der Stromrichter mit einem Windgenerator und einem Energieversorgungsnetz verbunden ist.

## Patentansprüche

1. Verfahren zur Ansteuerung eines Stromrichters (1), wobei bei der Ansteuerung von Halbleitern einer ersten Phase des Stromrichtes (1) eine Taktungslücke (2) vorgesehen wird, **dadurch gekennzeichnet, dass** der zeitliche Mittelpunkt (21) der Taktungslücke (2) zu einem Scheitelpunkt des erzeugten Spannungsverlaufs (3) in der ersten Phase (11) zeitlich verschoben ist.

2. Verfahren zur Ansteuerung nach Anspruch 1, wobei die Taktungslücke (2) um einen Wert zeitlich verschoben wird, der zwischen 50% und 100% des Wertes der Verschiebung zwischen Spannung und Strom in der ersten Phase (11) entspricht.

3. Verfahren zur Ansteuerung nach einem der Ansprüche 1 oder 2, wobei der zeitliche Mittelpunkt (21) der Taktungslücke (2) identisch ist mit einem korrespondierenden Scheitelpunkt (41) des Stromverlaufs in der ersten Phase.

4. Verfahren zur Ansteuerung nach einem der Ansprüche 1 bis 3, wobei sich die Taktungslücke (2) über einen zeitlichen Anteil von 1/6 der Periodendauer des erzeugten Spannungsverlaufs (3) erstreckt.

5. Verfahren zur Ansteuerung nach einem der Ansprüche 1 bis 4, wobei die Taktungslücke (2) Teil einer verschobenen Flat-Top-Modulation ist.

6. Verfahren zur Ansteuerung nach einem der Ansprüche 1 bis 5, wobei der Stromrichter (1) mit einem Energieversorgungsnetz (6) verbunden ist, wobei zur Beeinflussung der Spannung des Energieversorgungsnetzes (6) eine Grundschwingungsverschiebungsblindleistung, zwischen Stromrichter (1) und Energieversorgungsnetz (6) ausgetauscht wird.

7. Stromrichter (1) zur Verbindung einer elektrischen Komponente (7) mit einem Energieversorgungsnetz (6), wobei der Stromrichter (1) eine Regelung zur Durchführung des Verfahrens nach einem der Ansprüche 1 bis 6 aufweist, wobei zur Beeinflussung der Spannung des Energieversorgungsnetzes (6) eine Blindleistung zwischen Stromrichter (1) und Energieversorgungsnetz (6) austauschbar ist.

8. Stromrichter nach Anspruch 7, wobei der Stromrichter (1) IGBT Halbleiter mit einer Sperrspannung von mindestens 4,5kV aufweist.

9. Windkraftanlage (8) mit mindestens einem Stromrichter (1) nach einem der Ansprüche 7 oder 8, wobei der Stromrichter (1) mit einem Windgenerator (81) und einem Energieversorgungsnetz (6) verbunden ist.
